# DEMANDE DE BREVET EUROPEEN

(11) **EP 1 271 450 A1**
(43) Date de publication de la demande: **02.01.2003**
(21) Numéro de dépôt: 02290900.6
(22) Date de dépôt: 11.04.2002
(51) Int. Cl.: G09B 9/08

(54) **Simulateur de vol adapté à une famille d'aéronefs.**

(30) Priorité: 23.04.2001 FR 0105431
(71) Demandeur: AIRBUS FRANCE, 31060 Toulouse (FR)
(72) Inventeur: Villey, Philippe, 31490 Leguevin (FR)
(74) Mandataire: Hauer, Bernard

(57) **Abrégé**

- La présente invention concerne un simulateur de vol adapté à une famille d'aéronefs et comportant au moins un ensemble matériel (2) commun aux aéronefs de la famille et susceptible de réaliser au moins une fonction en mettant en oeuvre un programme logiciel supporté par une mémoire (M1, M2, M3, M4) non volatile d'un module (3), ledit module (3) étant relié de façon amovible audit ensemble matériel (2).
- Selon l'invention, ledit module (3) comporte une pluralité de mémoires indépendantes (M1, M2, M3, M4), dont chacune comprend un programme logiciel spécifique permettant la mise en oeuvre de ladite fonction pour un type d'aéronef déterminé de la famille d'aéronefs, et des moyens (8) commandables permettant de sélectionner l'une desdites mémoires (M1 à M4).

## Description

La présente invention concerne un simulateur de vol adapté à une famille d'aéronefs.

Dans le cadre de la présente invention, on entend par famille d'aéronefs un ensemble d'aéronefs de types différents, mais comportant des équipements, par exemple des calculateurs, identiques pour tous les aéronefs de la famille.

On sait que les simulateurs de vol, en particulier ceux destinés à la formation des pilotes, requièrent un niveau de réalisme élevé et comportent, à cet effet, des équipements, notamment des équipements de calcul, identiques à ceux existant sur les aéronefs, dont ils simulent le fonctionnement.

Un tel équipement de calcul monté sur un simulateur de vol et adapté à toute une famille d'aéronefs comprend, de façon connue, un ensemble matériel qui est commun auxdits aéronefs de ladite famille et qui est susceptible de réaliser au moins une fonction particulière, telle que la commande d'affichages à tubes cathodiques de la planche de bord par exemple, en mettant en oeuvre un programme logiciel approprié.

Ce programme logiciel, qui est généralement supporté par une mémoire non volatile d'un module relié de façon amovible audit ensemble matériel, est spécifique et exclusif d'un type déterminé d'aéronef de ladite famille.

Par conséquent, il existe autant de modules différents comportant chacun un programme logiciel approprié, qu'il existe de types différents d'aéronefs dans la famille considérée.

Aussi, pour passer d'un mode de simulation relatif à un type d'aéronef (A330 par exemple) à un mode de simulation relatif à un autre type (A340 par exemple) de la même famille, il est nécessaire de remplacer manuellement tous les modules porteurs de programmes logiciels spécifiques des différents équipements de calcul du simulateur utilisé.

A cet effet, on notera, à titre d'exemple, que les avions de transport civil du type A330/A340 sont équipés chacun de trois calculateurs DMC (Display Management Computer) destinés à commander les affichages à tubes cathodiques de la planche de bord, chacun desdits calculateurs DMC comportant deux modules différents, ce qui suppose sur le simulateur de vol le remplacement de six modules, rien que pour la commande desdits affichages, lors d'un changement de mode de simulation.

Une telle opération manuelle de remplacement de module généralement par désenfichage et enfichage est contraignante, délicate à mettre en oeuvre et coûteuse en temps.

De plus, la répétition de telles opérations, à chaque changement de mode de simulation, est source d'usure, en particulier des moyens de connexion prévus sur l'ensemble matériel de l'équipement de calcul et/ou sur les modules.

La présente invention a pour objet de remédier à ces inconvénients. Elle concerne un simulateur de vol adapté à une famille d'aéronefs, en particulier des avions de transport civil, et permettant notamment un changement de mode de simulation simplifié et à coût réduit.

A cet effet, ledit simulateur de vol du type adapté à une famille d'aéronefs et comportant au moins un équipement de calcul qui comprend un ensemble matériel commun auxdits aéronefs de ladite famille et susceptible de réaliser au moins une fonction en mettant en oeuvre un programme logiciel qui est supporté par une mémoire non volatile d'un module, ledit module étant relié de façon amovible audit ensemble matériel, est remarquable en ce que ledit module comporte :
- une pluralité de mémoires indépendantes, dont chacune comprend un programme logiciel spécifique permettant la mise en oeuvre de ladite fonction pour un type d'aéronef déterminé de ladite famille d'aéronefs ; et
- des moyens commandables permettant de sélectionner, lorsque ledit module est relié audit ensemble matériel, l'une desdites mémoires, dont le programme logiciel est alors mis en oeuvre par ledit ensemble matériel.

Ainsi, grâce à l'invention, ledit module de support de programme logiciel est commun à toute la famille d'aéronefs.

Par conséquent, il n'est plus nécessaire :
- de prévoir un nombre aussi important de modules qu'il existe de types d'aéronefs différents, le module conforme à l'invention réalisant à lui seul toutes les fonctions réalisées par une famille de modules usuels ; et
- de remplacer manuellement le ou les modules lors d'un changement de mode de simulation, une simple sélection de mémoire étant suffisante, ce qui permet de remédier aux inconvénients précités (contrainte, usure, coût, ...) dus aux opérations manuelles qui sont nécessaires usuellement.

Par ailleurs, de façon avantageuse et simplifiée, lesdits moyens pour sélectionner l'une desdites mémoires sont commandables par un signal émis par ledit ensemble matériel.

En outre, avantageusement, chacune desdites mémoires du module supportant un programme logiciel est effaçable et programmable électriquement, ce qui permet de mettre à jour facilement les programmes logiciels et évite donc de remplacer le module lorsqu'une modification d'un programme logiciel est nécessaire, réduisant ainsi les coûts de développement des modifications de logiciel.

Par ailleurs, dans un but de protection, ledit module comporte, de façon avantageuse, des moyens de verrouillage empêchant un changement de sélection de mémoire sans couper l'alimentation, à savoir généralement sans mettre à l'arrêt le simulateur.

Toutefois, selon l'invention, lesdits moyens de verrouillage sont susceptibles d'être inhibés par la réception d'un signal approprié. Ceci est notamment utile lors de la reprogrammation des différents programmes logiciels et évite d'avoir à couper l'alimentation pour passer de la programmation ou la reprogrammation d'un programme logiciel à celle d'un autre du même module.

Les figures du dessin annexé feront bien comprendre comment l'invention peut être réalisée. Sur ces figures, des références identiques désignent des éléments semblables.

La figure 1 représente schématiquement un module porteur d'un programme logiciel d'un simulateur de vol conforme à l'invention.

La figure 2 illustre schématiquement un banc de programmation pour programmer un module conforme à l'invention.

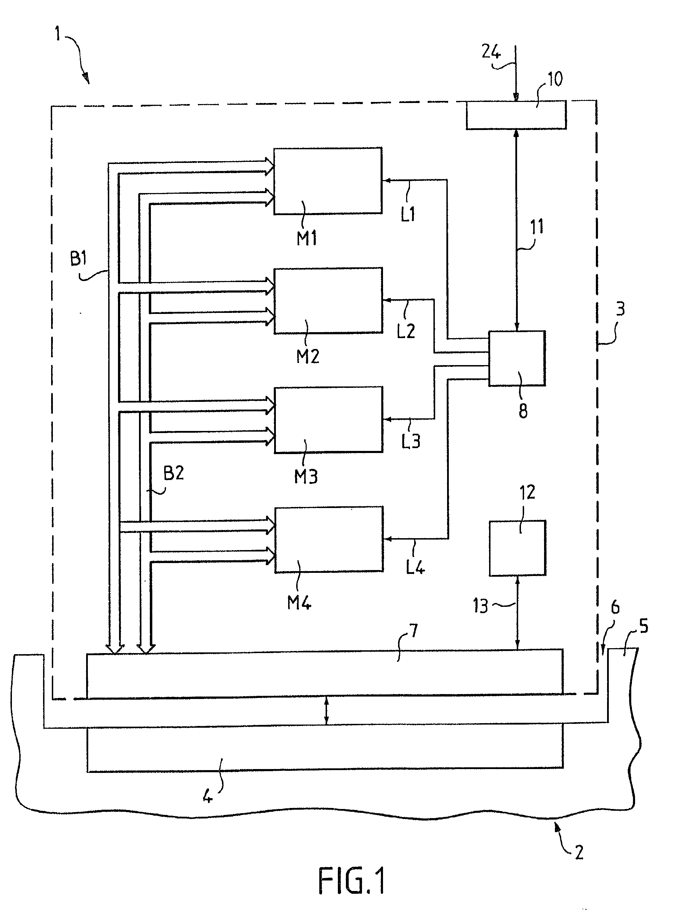

Le simulateur de vol 1 conforme à l'invention et représenté partiellement sur la figure 1 est adapté à une famille d'aéronefs, en particulier des avions de transport civil.

A cet effet, ledit simulateur de vol 1 est du type comportant au moins un équipement de calcul qui comprend :
- un ensemble matériel 2 commun auxdits aéronefs de ladite famille et susceptible de réaliser au moins une fonction, par exemple la commande d'un élément non représenté dudit aéronef, en mettant en oeuvre un programme logiciel qui est supporté par une mémoire non volatile d'un module 3 ; et
- ledit module 3 qui est relié électriquement et mécaniquement, de façon amovible, audit ensemble matériel 2.

Ledit ensemble matériel 2 comprend, entre autres, une unité centrale non représentée et des moyens de connexion 4, ainsi qu'un boîtier 5 définissant un logement 6 dans lequel peut être introduit partiellement ou intégralement ledit module 3 entouré également d'un boîtier rigide.

Lorsque ledit module 3 est emboîté à fond dans le logement 6, les moyens de connexion 4 coopèrent avec des moyens de connexion 7 du module 3 de sorte que lesdites parties 2 et 3 sont alors reliées électriquement et mécaniquement. Bien entendu, ledit module 3 peut être extrait, par traction, hors du logement 6, de sorte qu'alors les deux parties 2 et 3 sont indépendantes l'une de l'autre.

Selon l'invention, ledit module 3 comporte :
- une pluralité de mémoires indépendantes M1, M2, M3 et M4, dont chacune comprend un programme logiciel spécifique permettant la mise en oeuvre de la fonction précitée pour un type d'aéronef déterminé et exclusif de ladite famille d'aéronefs ; et
- des moyens 8 commandables permettant de sélectionner, lorsque ledit module 3 est relié audit ensemble matériel 2, l'une desdites mémoires M1 à M4 dont le programme logiciel est alors mis en oeuvre par ledit ensemble matériel 2.

Les mémoires M1 à M4 qui présentent par exemple une capacité de 2 Mo sont des mémoires non volatiles afin que leur contenu ne soit pas perdu, en cas de coupure de l'alimentation de l'équipement de calcul.

L'activation d'une desdites mémoires M1 à M4 qui est sélectionnée par les moyens 8 est réalisée par la transmission d'un signal par l'intermédiaire d'une liaison L1, L2, L3 ou L4.

Comme on peut le voir sur la figure 1, lesdites mémoires M1 à M4 sont de plus reliées par une liaison commune B1 de transmission de bus d'adresses et par une liaison commune B2 de transmission de bus de données auxdits moyens de connexion 7.

Par conséquent, lorsque le module 3 est lié, mécaniquement et électriquement, à l'ensemble matériel 2, le simulateur de vol 1 peut mettre en oeuvre, grâce notamment à la coopération des moyens de connexion 4 et 7, le programme logiciel supporté par la mémoire M1, M2, M3 ou M4 qui a été sélectionnée et qui correspond donc à un type d'aéronef déterminé de la famille précitée.

Ainsi, grâce à l'invention, lorsque l'on désire modifier le mode de simulation, c'est-à-dire réaliser la simulation pour un autre type d'aéronef, il n'est plus nécessaire de remplacer manuellement tout le module 3 comme cela est le cas pour les simulateurs de type usuel, mais il suffit simplement de sélectionner une autre mémoire, à savoir celle qui supporte le programme logiciel approprié au nouveau mode de simulation envisagé.

Ceci permet d'éviter des manipulations qui sont contraignantes, souvent délicates à mettre en oeuvre, sources d'usure surtout au niveau des moyens de connexion et coûteuses en temps.

Bien entendu, le module 3 est soumis aux mouvements engendrés éventuellement par le simulateur 1. Aussi, pour pouvoir supporter les contraintes mécaniques liées à de tels mouvements, le boîtier du module 3 est protégé mécaniquement, par exemple par deux demi-coques en plastique rigide.

Le module 3 comporte de plus des seconds moyens de connexion 10 qui sont susceptibles d'être reliés (avec de préférence un verrouillage par vis) à des moyens de connexion coopérants, non représentés et prévus sur l'ensemble matériel 2.

Un signal de commande peut être transmis du simulateur 1 aux moyens de sélection 8 par l'intermédiaire desdits moyens de connexion 10 et d'une liaison 11, pour commander une sélection de mémoire.

Ce signal de commande ou de sélection comprend de préférence deux signaux numériques identiques.

Selon l'invention, pour des raisons de sécurité, après la sélection d'un programme logiciel réalisé lors de l'initialisation du simulateur 1, il n'est plus possible, grâce à des moyens de verrouillage, de changer de programme logiciel sans couper l'alimentation, c'est-à-dire sans mettre le simulateur 1 à l'arrêt.

Pour ce faire, selon l'invention, le module 3 enregistre, par exemple à l'aide des moyens 8, l'état du signal de sélection reçu à la mise sous tension de l'équipement de calcul (et donc du module 3) et verrouille cette configuration, avant que l'ensemble matériel 2, par l'intermédiaire d'un processeur prévu à cet effet, ne réalise une première lecture de la mémoire sélectionnée, afin que tout changement ultérieur de l'état du signal de sélection soit sans effet.

On notera en outre que :
- l'alimentation électrique du module 3 est fournie par l'ensemble matériel 2 par l'intermédiaire des moyens de connexion 4 et 7 coopérants ; et
- le module 3 comporte de plus une mémoire morte série 12 reliée par une liaison 13 aux moyens de connexion 7.

Par ailleurs, chacune des mémoires M1 à M4 du module 3, supportant un programme logiciel, est effaçable et programmable électriquement, ce qui permet d'adapter facilement le module 3 à toute modification ou tout remplacement de logiciel.

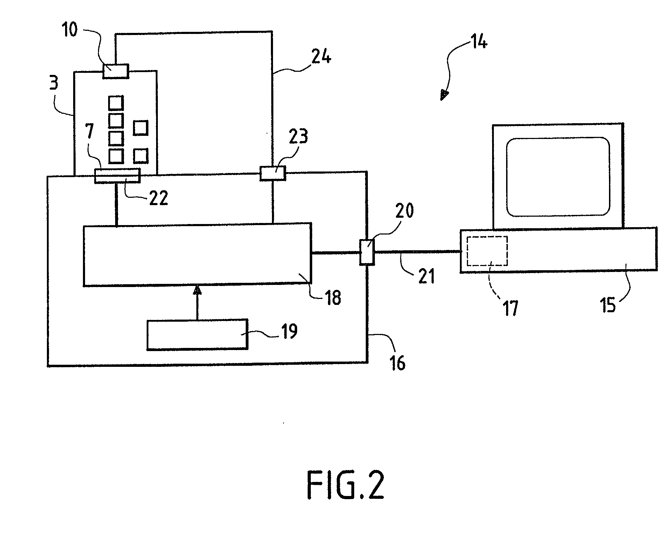

A cet effet, pour modifier ou remplacer au moins l'un des programmes logiciels supportés par les mémoires M1 à M4, on utilise de préférence un banc de programmation 14 représenté schématiquement sur la figure 2.

Selon l'invention, ce banc de programmation 14 comporte :
- une unité de commande 15 du type ordinateur personnel, comprenant une interface utilisateur et une interface électrique associée à un boîtier de programmation 16 par l'intermédiaire d'une carte standard 17 d'entrées/sorties discrètes ; et
- ledit boîtier de programmation 16 comprenant une carte électronique 18 de programmation, des moyens d'alimentation 19 et un support non représenté pour recevoir le module 3 à programmer ou à reprogrammer.

De plus, ledit boîtier de programmation 16 est relié :
- à ladite unité de commande 15, par l'intermédiaire d'un connecteur 20 associé à un câble blindé 21 ; et
- audit module 3, par l'intermédiaire, d'une part de moyens de connexion 22 coopérants avec les moyens de connexion 7 et, d'autre part, de moyens de connexion 23 reliés aux moyens de connexion 10 par un câble de commande 24.

Selon l'invention, la carte électronique 18 comprend :
- les ressources de gestion des mémoires M1 à M4 (algorithmes d'écriture, de lecture et d'effacement) ;
- les ressources de gestion de la mémoire morte série 12 (algorithmes d'écriture, de lecture et d'effacement) ;
- l'interface logique d'interprétation des commandes de l'unité 15 (commandes d'écriture, de lecture, d'effacement et de sélection des mémoires M1 à M4) ; et
- l'interface de gestion des échanges entre l'unité 15 et le boîtier de programmation 16. Cette interface regroupe des lignes logiques spécifiques qui signalent qu'une donnée est prête à être transmise ou qu'une donnée a bien été prise en compte.

On notera de plus que, pour passer de la programmation du programme logiciel supporté par l'une desdites mémoires M1 à M4 à la programmation de celui supporté par une autre mémoire, on inhibe les moyens de verrouillage précités par l'intermédiaire d'un signal approprié émis par le banc de programmation 14.

Le module 3 conforme à l'invention peut donc être soumis soit à un processus opérationnel de simulation tel que représenté sur la figure 1, soit à un processus de programmation tel que représenté sur la figure 2.

Selon l'invention, les différentes phases du processus opérationnel sont :
- la sélection de la mémoire M1, M2, M3 ou M4 par le simulateur 1 via le câble de commande 24 et les moyens 10 et 8 ;
- la mise sous tension de l'ensemble matériel 2 ;
- la mémorisation de la sélection par le module 3 lors de cette mise sous tension ; et
- une phase de lecture habituelle, identique à celle existant pour les modules usuels (spécifiques à un seul type d'aéronef).

Bien entendu, le simulateur de vol 1 conforme à l'invention peut toujours fonctionner avec de tels modules usuels. Dans ce cas, le câble de commande 24 qui existe également sur le simulateur 1, comme on peut le voir sur la figure 1, est relié à une prise de repos spécifique, puisque les modules usuels ne comportent pas de moyens de connexion 10 destinés à la transmission de signaux de sélection.

## Revendications

1. Simulateur de vol adapté à une famille d'aéronefs et comportant au moins un équipement de calcul qui comprend un ensemble matériel (2) commun auxdits aéronefs de ladite famille et susceptible de réaliser au moins une fonction en mettant en oeuvre un programme logiciel qui est supporté par une mémoire (M1, M2, M3, M4) non volatile d'un module (3), ledit module (3) étant relié de façon amovible audit ensemble matériel (2),
**caractérisé en ce que** ledit module (3) comporte :
- une pluralité de mémoires indépendantes (M1, M2, M3, M4), dont chacune comprend un programme logiciel spécifique permettant la mise en oeuvre de ladite fonction pour un type d'aéronef déterminé de ladite famille d'aéronefs ; et
- des moyens (8) commandables permettant de sélectionner, lorsque ledit module (3) est relié audit ensemble matériel (2), l'une desdites mémoires (M1 à M4), dont le programme logiciel est alors mis en oeuvre par ledit ensemble matériel (2).

2. Simulateur de vol selon la revendication 1,
**caractérisé en ce que** lesdits moyens (8) pour sélectionner l'une desdites mémoires (M1 à M4) sont commandables par un signal émis par ledit ensemble matériel (2).

3. Simulateur de vol selon l'une des revendications 1 et 2,
**caractérisé en ce que** chacune desdites mémoires (M1 à M4) du module (3) supportant un programme logiciel est effaçable et programmable électriquement.

4. Simulateur de vol selon l'une quelconque des revendications précédentes,
**caractérisé en ce que** ledit module (3) comporte des moyens de verrouillage (8) empêchant un changement de sélection de mémoire sans couper l'alimentation.

5. Simulateur de vol selon la revendication 4,
**caractérisé en ce que** lesdits moyens de verrouillage (8) sont susceptibles d'être inhibés par la réception d'un signal approprié.
